# EUROPEAN PATENT APPLICATION

(11) **EP 4 064 145 A1**
(43) Date of publication of application: **28.09.2022**
(21) Application number: 22160472.1
(22) Date of filing: 07.03.2022
(51) Int. Cl.: G06Q 10/00, G05B 19/418

(54) **ANALYSIS APPARATUS, ANALYSIS METHOD AND PROGRAM**

(30) Priority: 26.03.2021 JP 2021054394
(71) Applicant: Yokogawa Electric Corporation, Musashino-shi, Tokyo 180-8750 (JP)
(72) Inventor: Ema, Nobuaki, Musashino-shi, Tokyo (JP); Kambe, Takahiro, Musashino-shi, Tokyo (JP); Seki, Tatenobu, Musashino-shi, Tokyo (JP); Annen, Masato, Musashino-shi, Tokyo (JP)
(74) Representative: Grünecker Patent- und Rechtsanwälte PartG mbB

(57) **Abstract**

Provided is information to determine whether a maintenance process should be performed on a plant. Provided is an analysis apparatus, including: an operation value analysis unit configured to analyze operation values including a first operation value when a maintenance process is performed on an analysis target plant and a second operation value when the maintenance process is not performed on the analysis target plant, each of the operation values depending on at least any of an amount or quality of deliverables produced or emissions emitted by the analysis target plant under a designated condition; and a value comparison unit configured to compare the first operation value to the second operation value.

## Description

### BACKGROUND

### 1. TECHNICAL FIELD

The present invention relates to an analysis apparatus, an analysis method and a program.

### 2. RELATED ART

Conventionally, a technology for analyzing behavior of a plant is known (for example, refer to Patent Document 1 and 2).
Patent Document 1: Japanese Patent Application Publication No. 2017-91289
Patent Document 2: Japanese Patent Application Publication No. HI 1-327626

### 3. TECHNICAL PROBLEM

When a plant is under operation, a device or the like of the plant may deteriorate. In this case, it can be considered to perform a maintenance process of exchanging or repairing the device of the plant. In the analysis of the plant, it is preferred to be able to provide information to determine whether the plant should be maintained or not.

### GENERAL DISCLOSE

In a first aspect of the present invention, an analysis apparatus is provided. The analysis apparatus may include an operation value analysis unit configured to analyze operation values including a first operation value when a maintenance process is performed on an analysis target plant and a second operation value when the maintenance process is not performed on the analysis target plant, each of the operation values depending on at least any of an amount or quality of deliverables produced or emissions emitted by the analysis target plant under a designated condition. The analysis apparatus may include a value comparison unit configured to compare the first operation value to the second operation value.

The operation value analysis unit may analyze the operation values depending on the quality of the deliverables.

The operation value analysis unit may analyze the operation values depending on the amount of the emissions.

The operation value analysis unit may calculate the operation values per unit operation time of the analysis target plant.

The analysis apparatus may include a maintenance value calculation unit configured to calculate a value of the maintenance process, based on a difference between the first operation value and the second operation value, and a fee of the maintenance process.

The analysis apparatus may include an operation cost analysis unit configured to analyze operation costs including a first operation cost when a maintenance process is performed on an analysis target plant and a second operation cost when the maintenance process is not performed on the analysis target plant, each of the operation costs being a cost to operate the analysis target plant under a designated condition. The maintenance value calculation unit may calculate a value of the maintenance process, further based on a difference between the first operation cost and the second operation cost.

The maintenance value calculation unit may calculate time of the maintenance process that maximizes a value of the maintenance process.

The analysis apparatus may include a maintenance data storage unit configured to store maintenance data indicating a state change in each existing plant when various maintenance processes are performed in a plurality of existing plants. The operation value analysis unit may extract, from the maintenance data storage unit, the maintenance data of the existing plant corresponding to the analysis target plant, and analyze the operation value based on the maintenance data extracted.

The operation value analysis unit may extract, based on at least one of a scale of a plant, types of the deliverables, types of the emissions or used device, the existing plant similar to the analysis target plant.

The analysis apparatus may include a state acquisition unit configured to acquire first status information indicating a state of the analysis target plant when the maintenance process is performed and second status information indicating a state of the analysis target plant when the maintenance process is not performed on the analysis target plant. The analysis apparatus may include a changing information storage unit configured to store changing information indicating a change over time in a state of the analysis target plant. The operation value analysis unit may analyze a state over time of the analysis target plant when the maintenance process is performed, based on the first status information and the changing information, and analyze the first operation value, based on the state over time. The operation value analysis unit may analyze a state over time of the analysis target plant when the maintenance process is not performed based on the second status information and the changing information, and analyzes the second operation value based on the state over time.

The analysis apparatus may include a model generation unit configured to produce a first model for simulating a case where a production is performed with a state of a plurality of devices constituting the analysis target plant being a first state, and a second model for simulating a case where a production is performed with a state of the plurality of devices being a second state, which is different from the first state. The analysis apparatus may include an influence degree evaluation unit configured to compare the first model to the second model, and evaluate an influence degree on the operation value from a state of each of the devices. The analysis apparatus may include a maintenance candidate extraction unit configured to extract, from the plurality of devices, a candidate on which a maintenance process is performed, based on the influence degree. The operation value analysis unit may analyze the first operation value when the maintenance process is performed on the device extracted as the candidate.

The analysis apparatus may include a model generation unit configured to produce a first model for simulating a case where a production is performed with a state of a plurality of devices constituting the analysis target plant being a first state, and a second model for simulating a case where a production is performed with a state of the plurality of devices being a second state, which is different from the first state. The analysis apparatus may include an influence degree evaluation unit configured to compare the first model to the second model, and evaluate an influence degree on the operation costs from a state of each of the devices. The analysis apparatus may include a maintenance candidate extraction unit configured to extract, from the plurality of devices, a candidate on which a maintenance process is performed, based on the influence degree. The operation cost analysis unit may analyze the operation costs when the maintenance process is performed on the device extracted as the candidate.

A second aspect of the present invention provides an analysis method. The analysis method may include analyzing operation values including a first operation value when a maintenance process is performed on an analysis target plant and a second operation value when the maintenance process is not performed on the analysis target plant, each of the operation values depending on at least any of an amount or quality of deliverables produced or emissions emitted by the analysis target plant under a designate condition. The analysis method may include comparing the first operation value to the second operation value.

A third aspect of the present invention provides a program for causing a computer to execute the analysis method according to the second aspect.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a configuration example of an analysis apparatus 100 for analyzing operations of a plant.
Fig. 2 illustrates one example of an operation value.
Fig. 3 illustrates exemplary operations of the analysis apparatus 100.
Fig. 4 illustrates exemplary operations of the analysis apparatus 100.
Fig. 5 illustrates another configuration example of the analysis apparatus 100.
Fig. 6 illustrates another configuration example of the analysis apparatus 100.
Fig. 7 illustrates another configuration example of the analysis apparatus 100.
Fig. 8 illustrates one example of maintenance data stored in a maintenance data storage unit 50.
Fig. 9 illustrates another configuration example of the analysis apparatus 100.
Fig. 10 illustrates one example of changing information stored in a changing information storage unit 70.
Fig. 11 illustrates another configuration example of the analysis apparatus 100.
Fig. 12 illustrates another configuration example of the analysis apparatus 100.
Fig. 13 illustrates one example of an analysis method of an analysis target plant.
Fig. 14 illustrates an example configuration of a computer 1200 in which all or some aspects of the present invention can be embodied.

### DESCRIPTION OF EXEMPLARY EMBODIMENTS

Hereinafter, the present invention will be described through embodiments of the invention, but the following embodiments do not limit the invention according to the claims. And all the combinations of the features described in the embodiment(s) are not necessarily essential to means provided by aspects of the invention.

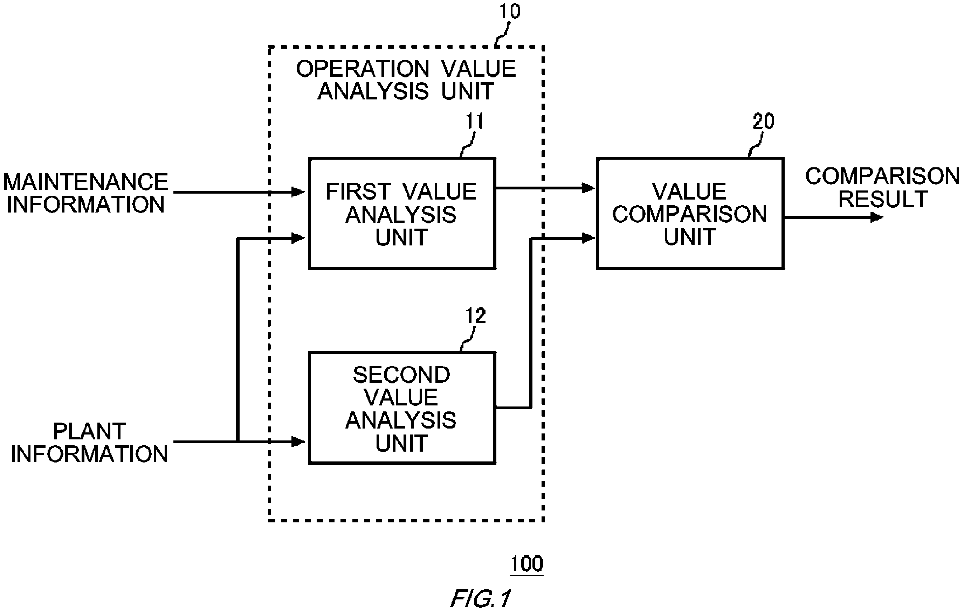

Fig. 1 illustrates a configuration example of an analysis apparatus 100 for analyzing operations of a plant. The analysis apparatus 100 provides information for determining whether a maintenance process on an analysis target plant should be performed. In particular, the analysis apparatus 100 analyzes the operations of the plant when the maintenance process is performed on the analysis target plant and the operations of the plant when the maintenance process is not performed on the analysis target plant. The plant is at least a part of a facility such as, for example, a water processing facility, a production facility, a power generation facility and a storage facility.

The analysis apparatus 100 of this example is a computer for performing predetermined data processing. The computer may execute a program for causing the computer to function as each unit of the analysis apparatus 100.

The analysis apparatus 100 includes an operation value analysis unit 10 and a value comparison unit 20. The operation value analysis unit 10 analyzes an operation value depending on at least any of the volume or the quality of the produced deliverables or emitted emissions by the analysis target plant under a designated condition for both of a case where the maintenance process is performed on the analysis target plant and a case where the maintenance process is not performed. The designation of the condition may be preset before analysis, or properly set or changed during analysis by a user or the like of the analysis apparatus 100. The condition may have an influence on the operation value produced by the analysis target plant, and designates the operation condition of the analysis target plant. The condition may be an operation period of the analysis target plant. In this case, the analysis apparatus 100 analyzes the operation value produced by the analysis target plant within the operation period. The condition may designate the amount of the deliverables or the emissions. In this case, the analysis apparatus 100 may analyze the operation value based on the period it takes for the analysis target plant to produce the amount of deliverables or emissions. For example, the analysis apparatus 100 may calculate a higher operation value the shorter the period. It should be noted that the condition is not limited to these examples. The condition may designate a parameter for controlling each device of the analysis target plant. The start point of the target period is a time point when, for example, the maintenance process is performed. The end point of the target period may be a time point when the operation of the analysis target plant ends, or may be a time point when the next maintenance process is performed, or may be any other time point.

The maintenance process refers to exchanging or repairing the device that constitutes the analysis target plant. The maintenance process may include exchanging or repairing the components of the device, or may include exchanging or updating the software for controlling the device.

The deliverables refer to those that should be produced by the analysis target plant. The deliverables are not limited to substances. The deliverables may be energy, such as electrical power or heat. Examples of deliverables include water, gases, chemicals obtained through chemical reactions, electricity and so on. Emissions refer to those produced incidentally to the process of producing the deliverables. The emissions can be substances. Examples of emissions include wastewater, gases such as carbon dioxide, byproducts of chemical reactions and so on.

The operation value of the plant depends on at least one of the volume or the quality of the deliverables or the emissions produced during the target period. For example, if the amount of deliverables is higher, the operation value becomes higher. Similarly, if the amount of beneficial emissions is higher, the operation value becomes higher; if the amount of unwanted emissions is higher, the operation value becomes lower. The amount of deliverables or emissions may be at least one of volume, weight, or energy content.

The quality of deliverables is a physical or chemical parameter that affects the value of the product, such as the composition, properties and so on of the deliverables. The composition of the deliverables is, for example, purity. The property of the deliverables is, for example, viscosity, density, transparency and so on. The quality of deliverables may be the yield of the deliverables (for example, the percentage of good products). Also, the quality of the deliverables may be the composition of the deliverables or the distribution of the properties. For example, when deliverables are classified into a plurality of grades based on composition or properties, the quality of the deliverables may be the ratio of deliverables classified into each grade. The same is true for the quality of emissions.

The operation value may be a monetary value of the deliverables, depending on the amount or quality of the deliverables. The unit price per unit quantity of deliverables may be constant, regardless of when the deliverables are produced, or it may vary depending on the production period of the deliverables. The unit price for each production period of the deliverables may be calculated based on the current market value or calculated based on the predicted demand for the deliverables. The same is true for emissions. The operation value of the emissions may include the cost of processing the emissions. This cost may also be constant, regardless of the emission period of the emissions, or it may vary depending on the emission period.

The operation value analysis unit 10 of this example includes a first value analysis unit 11 and a second value analysis unit 12. The first value analysis unit 11 analyzes a first operation value when the maintenance process is performed on the analysis target plant. The second value analysis unit 12 analyzes a second operation value when the maintenance process is not performed on the analysis target plant. Each value analysis unit may use a predetermined simulation model to analyze the operations of the plant when the maintenance process is performed on the analysis target plant and the operations of the plant when the maintenance process is not performed. The simulation model may use any known model that can analyze at least one of the quality or amount of the deliverables or emissions.

The plant information may be input to the second value analysis unit 12. The information may be input by the user of the analysis apparatus 100, or may be acquired automatically from the analysis target plant. The plant information is information for analyzing the second operation value of the analysis target plant. When the analysis target plant is a plant under operation, the plant information may be information indicating the current operation value of the analysis target plant. For example, the plant information may include information about the quality or the amount of the deliverables or the emissions that are being produced currently, or can be produced by the analysis target plant. The plant information may include information about the amount or the like of raw materials fed into the analysis target plant, or may include information about the consumption amount of the electrical power or the like. The plant information may also be information for producing a simulation model of the analysis target plant. The plant information may include information related to the type, performance, part numbers, and connection relationships of each component device of the plant. The plant information may include the measurement value of each sensor such as a temperature sensor, a pressure sensor or the like provided in the analysis target plant. The plant information may include information about a piping instrumentation diagram (P&ID), or CAD data or the like indicating the arrangement of the facility of the device or pipelines or the like.

The second value analysis unit 12 may construct a second simulation model configured to simulate the analysis target plant since the time of analysis based on the plant information. The plant information may include information indicating the performance of each component device at the time of analysis. In this way, the second simulation model that simulates the characteristics of the plant since the time of analysis can be constructed. The plant information may include initial value information indicating the initial value of the performance of each component device during the construction of the plant, and historical information indicating the operation history of the plant. The second value analysis unit 12 may also construct the second simulation model that simulates the characteristics of the plant since the time of analysis based on the initial value information, the performance of each component device at the time of analysis and the historical information. A deterioration model of each device for simulating how the deterioration undergoes in each device of the plant according to the operation history of the plant, may be provided to the second value analysis unit 12.

The maintenance information and the plant information may be input into the first value analysis unit 11. The information may be input by the user of the analysis apparatus 100. The maintenance information is information indicating the contents of the maintenance performed on the analysis target plant. The maintenance information may include information about the maintenance time, maintenance target device and the performance of the device after maintenance. The first value analysis unit 11 constructs the first simulation model when the analysis target plant is maintained based on the plant information and the maintenance information. The first value analysis unit 11 may construct a model that changes the performance of the maintenance target device based on the maintenance information with respect to the second simulation model constructed by the second value analysis unit 12.

The first value analysis unit 11 calculates the first operation value when performing the maintenance process based on the first simulation model. The second value analysis unit 12 calculates the second operation value when not performing the maintenance process based on the second simulation model.

The value comparison unit 20 compares the first operation value with the second operation value. Comparing the operation values refers to performing some information processing using the two operation values. The value comparison unit 20 may calculate the difference between the first operation value and the second operation value, or may produce a display image that shows the first operation value and the second operation value simultaneously or in sequence.

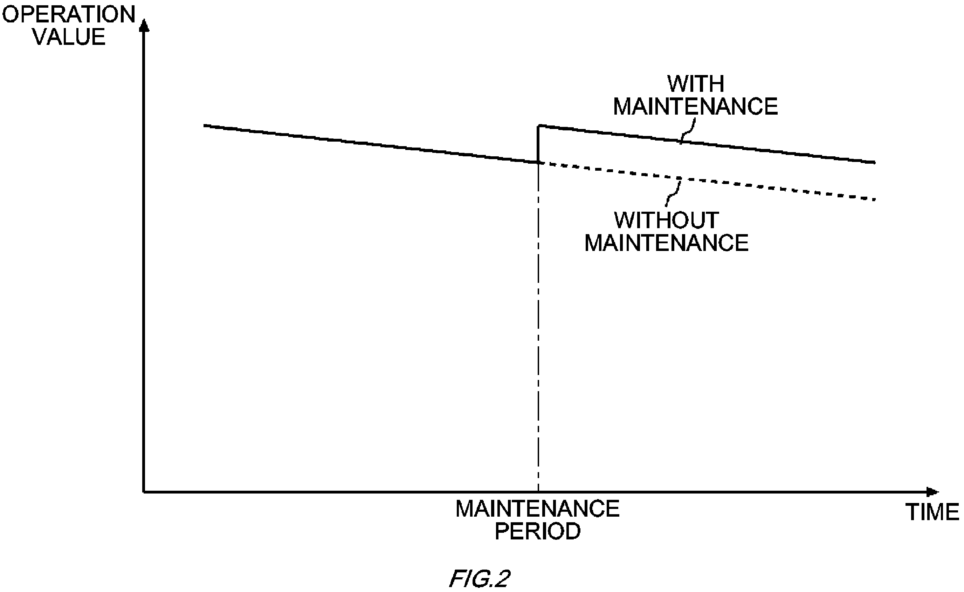

Fig. 2 illustrates one example of the operation value. The horizontal axis indicates time, and the vertical axis indicates the operation value of the plant per unit operation time in Fig. 2. For example, the vertical axis indicates the operation value when the plant is operated for a unit of time, such as an hour, a day, a month or the like. When the plant is operated, the production amount, production efficiency or the like may decrease due to the deterioration of the device. In this case, as shown in Fig. 2, the operation value per unit operation time of the plant is gradually decreasing.

If maintenance of the plant is performed during a predetermined maintenance period, the operation value increases. For example, by improving at least one of the quality or the amount of deliverables, the operation value increases. In Fig. 2, the first operation value when the maintenance process is performed is indicated by a solid line, and the second operation value when the maintenance process is not performed is indicated by a dashed line after the maintenance period.

The value comparison unit 20 may calculate the difference between the first operation value and the second operation value. Also, the value comparison unit 20 may integral the difference in the predetermined period. The integral value corresponds to the increase in the operation value due to the performance of the maintenance process. The value comparison unit 20 may also indicate information shown in Fig. 2.

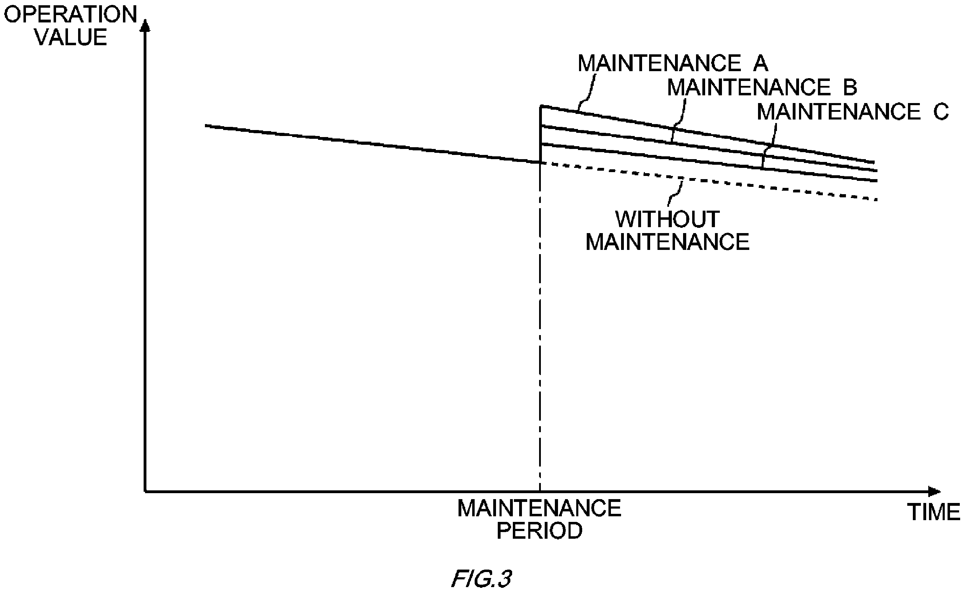

Fig. 3 illustrates an exemplary operation of the analysis apparatus 100. The first value analysis unit 11 of this example calculates the operation value when a maintenance process regarding a plurality of types of maintenance processes is performed. The type of each maintenance process may be the content of the maintenance process. For example, the content of the maintenance process may be the type or performance of the maintenance target device and the exchanged device, and the performance of the repaired device and so on. The value comparison unit 20 compares the operation value of each maintenance process to the operation value when the maintenance process is not performed.

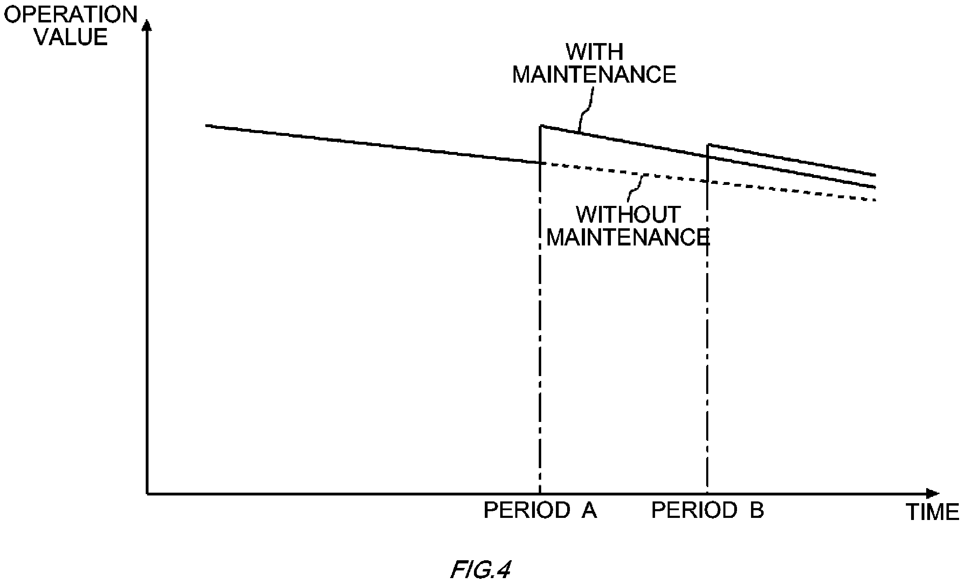

Fig. 4 illustrates an exemplary operation of the analysis apparatus 100. The first value analysis unit 11 of this example calculates the operation value when the maintenance process is performed during a plurality of maintenance periods. Also, the first value analysis unit 11 may also calculate the operation value for the plurality of types of the maintenance processes during each maintenance period. That is, the first value analysis unit 11 may combine the process shown in Fig. 3 and the process shown in Fig. 4.

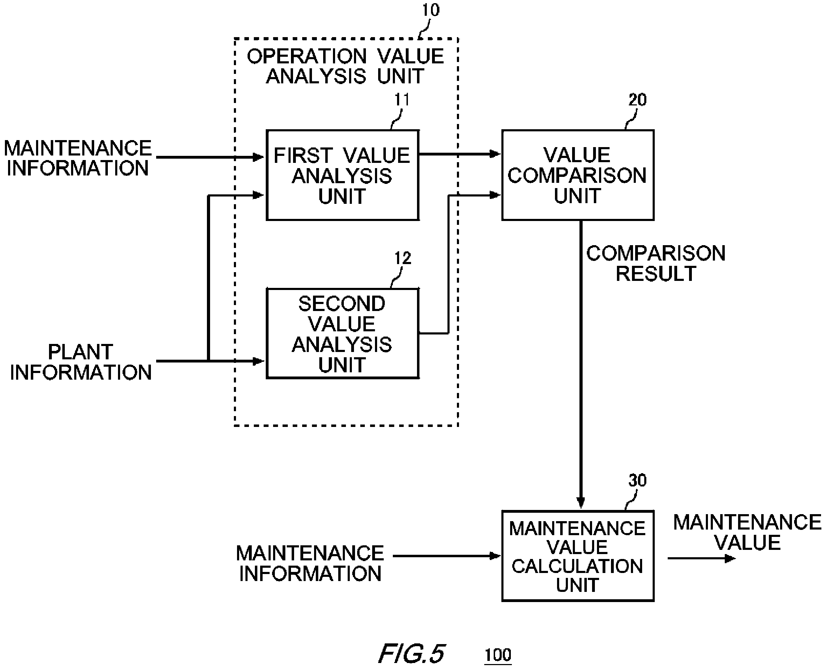

Fig. 5 illustrates another configuration example of the analysis apparatus 100. The analysis apparatus 100 of this example further includes a maintenance value calculation unit 30 compared to the configuration shown in Fig. 1. The maintenance value calculation unit 30 calculates the value of the maintenance process based on the difference between the first operation value and the second operation value and the maintenance process fee. The maintenance fee may use the value input by the user or the like, or may be calculated based on the maintenance contents by the value comparison unit 20. Also, the maintenance process fee may be preset for respective maintenance contents by the value comparison unit 20.

The value comparison unit 20 may calculate the value obtained by subtracting the maintenance fee from the increase in operation value due to the respective maintenance process as the maintenance value. As described above, the increase in operation value is an integral value of the difference between the first operation value and the second operation value per unit operation time over a given period of time.

Also, in the example shown in Fig. 3, the value comparison unit 20 may calculate the maintenance value for each type of the maintenance process. The value comparison unit 20 may detect the type of the maintenance process with a maximum maintenance value, and present it to the user.

Also, in the example shown in Fig. 4, the value comparison unit 20 may calculate the maintenance value for each period of the maintenance process. The value comparison unit 20 may detect the maintenance period with a maximum maintenance value and present it to the user.

Also, the value comparison unit 20 may calculate the maintenance value for each combination of the type of the maintenance process and the period of the maintenance process. The value comparison unit 20 may detect the combination of the type of the maintenance process and the maintenance period with the maximum maintenance value and present them to the user.

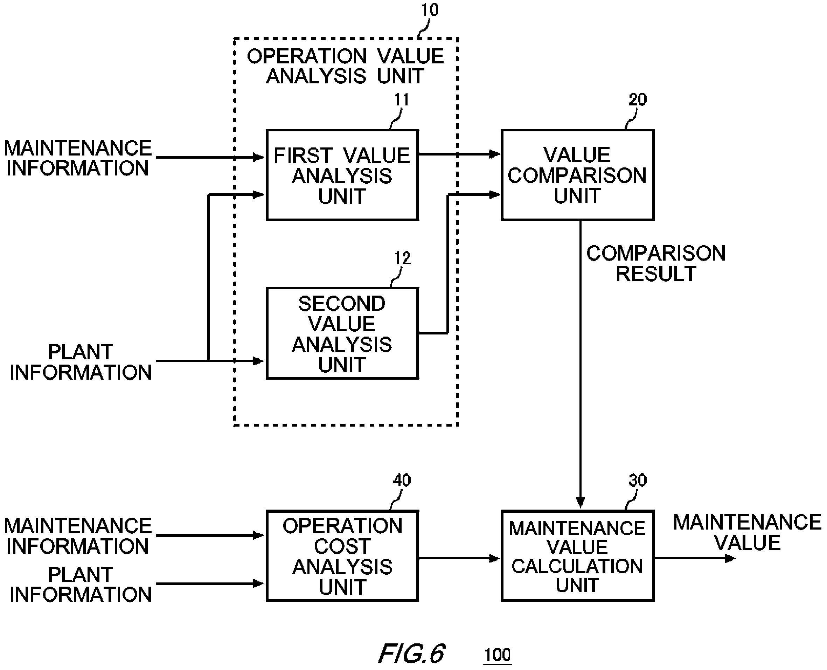

Fig. 6 illustrates another configuration example of the analysis apparatus 100. The analysis apparatus 100 of this example further includes an operation cost analysis unit 40 with respect to the example shown in Fig. 5. The operation cost analysis unit 40 analyzes the operation cost of the analysis target plant in a designated condition for both of the cases where the maintenance process is performed and the maintenance process is not performed on the analysis target plant. The condition is similar to the condition designated when analyzing the operation value. The operation cost is the cost such as the cost of the materials fed due to the operation of the plant and the cost of the energy consumption, which is required for the operation of the plant.

The plant information indicating the structure of the analysis target plant, the state of the device and so on and the maintenance information indicating the maintenance contents may be input to the operation cost analysis unit 40. When exchanging or repairing the device of the plant, the energy consumption and the amount or the quality of the deliverables regarding the amount of the fed materials may vary. The operation cost analysis unit 40 analyzes these variations based on the maintenance information and plant information. The operation cost analysis unit 40 may calculate the first operation cost when the maintenance process is performed, and the second operation cost when the maintenance process is not performed. The second operation cost may be a performance value of the operation cost of the analysis target plant in the current step, or may be an estimated value estimated based on the past history of the operation cost. The estimated value of the operation cost may use a constant value regardless of the operation period, or may use a value that increases with the operation period. The increase in the operation cost according to the operation period may be estimated by the past history of the operation cost of the plant, or may be estimated by the performance of another existing plant. The operation cost analysis unit 40 may have the performance data of another existing plant.

The first operation cost may be a cost obtained by adding or subtracting a variation caused by the maintenance process to the second operation cost. The operation cost analysis unit 40 may estimate the improvement of the performance of each device of the plant based on the maintenance information, and may calculate the variation of the operation cost based on the improvement of the performance. The operation cost analysis unit 40 may calculate the variation of the operation cost based on the performance value of the variation of the operation cost when a similar maintenance process is performed on the existing plant. The operation cost analysis unit 40 may have the performance data of another existing plant.

The maintenance value calculation unit 30 calculates the maintenance value based on the variation of the operation cost. The maintenance value calculation unit 30 of this example may add or subtract the increase in the operation value by performing the maintenance process and the variation of the operation cost, and may calculate the maintenance value by subtracting the maintenance fee. As described regarding Fig. 5, the maintenance value calculation unit 30 may calculate the maintenance value for each maintenance process type and each maintenance period. The maintenance value calculation unit 30 may detect the type of the maintenance process and the maintenance period that maximizes the maintenance value, and present them to the user. In this way, the maintenance value considering the operation cost can be analyzed.

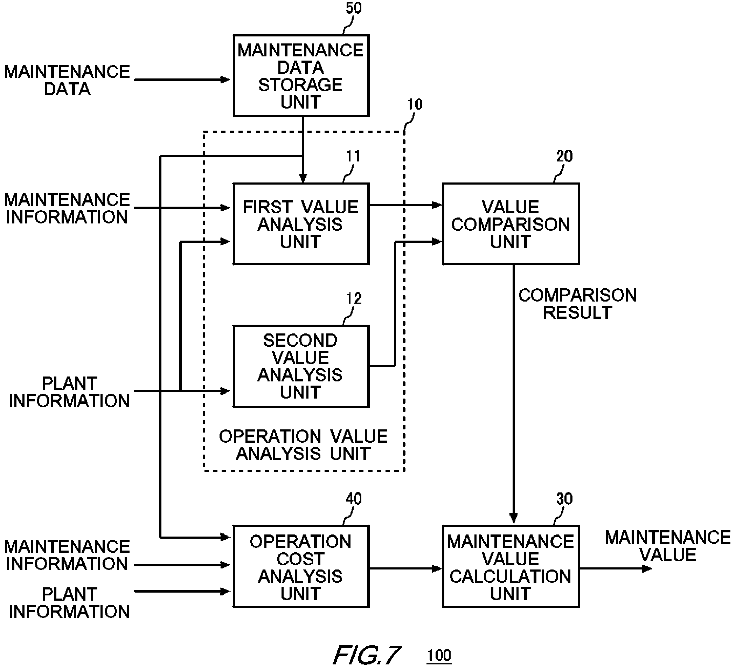

Fig. 7 illustrates another configuration example of the analysis apparatus 100. The analysis apparatus 100 of this example further includes a maintenance data storage unit 50 in addition to the configuration of the analysis apparatus 100 described regarding Fig. 1 to Fig. 6. The configurations other than the maintenance data storage unit 50 are identical to those of any analysis apparatus 100 described regarding Fig. 1 to Fig. 6.

The maintenance data storage unit 50 stores the maintenance data indicating the performance value of the state change of each existing plant when various maintenance processes are performed on the plurality of existing plants. The state change may be at least one of the change of the amount or quality of the deliverables or emissions and the change of the operation cost, or may be the change of a parameter for estimating the above-mentioned changes. For example, the state change may be a change in the performance of the maintenance target device. The performance of the device may be a processing amount per unit time, the quality of the products or the like. The information related to the operation cost stored in the maintenance data storage unit 50 may be input into the operation cost analysis unit 40.

The first value analysis unit 11 extracts the maintenance data of the existing plant corresponding to the analysis target plant from the maintenance data storage unit 50, and analyzes the first operation value based on the extracted maintenance data. The first value analysis unit 11 may extract the maintenance data of an existing plant with its structure closest to the analysis target plant, or may extract the maintenance data with its maintenance contents closets to the analysis target plant. The structure of the analysis target plant refers to the type, the performance, the connection relationship or the like of the device included in the analysis target plant.

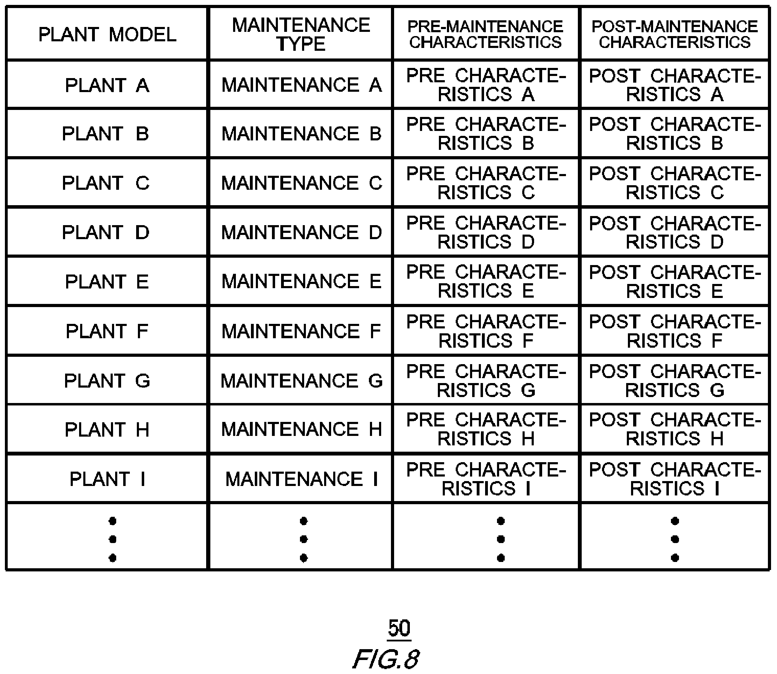

Fig. 8 illustrates one example of the maintenance data stored in the maintenance data storage unit 50. The maintenance data storage unit 50 stores a plant model that indicates the structure of the plant, a maintenance type that indicates the content of the maintenance performed, pre-maintenance characteristics that indicate the characteristics of the plant before the maintenance process, and post-maintenance characteristics that indicate the characteristics of the plant after the maintenance process, in correspondence.

The plant model includes information of P&ID or the like, for example. The plant model may include at least one piece of information of the scale of the plant, the type of the deliverables, the type of the emissions or the device under use. The plant model may include information indicating the operation environment of the plant, such as the temperature, humidity, amount of rain-fall or the like at the installation site of the plant. The pre-maintenance characteristic and the post-maintenance characteristic are information indicating the above-mentioned state change. As described above, the characteristic may be at least one of the changes in the amount or the quality of the deliverables or the emissions and the operation cost, or may be a parameter for estimating these.

The first value analysis unit 11 may calculate the similarity between the analysis target plant and each plant model of the maintenance data. The similarity is calculated higher when the plant scale, type of deliverables, type of emissions, type and number of device used, and connection relationships are consistent. The plant model may be a model indicating the structure of a part of the plant. In this case, the characteristics before maintenance and the characteristics after maintenance may be the characteristics of the part. Also, the first value analysis unit 11 may extract the plant model with a highest similarity with the maintenance target part of the analysis target plant.

The first value analysis unit 11 may select the maintenance data corresponding to the maintenance type for the analysis target plant. The maintenance process may classify a plurality of maintenance types in advance according to the maintenance contents. The maintenance type may be, for example, exchanging, repairing, cleaning or the like. The first value analysis unit 11 may extract the maintenance data with the similarity of the plant model is equal to or greater than a predetermined value and the maintenance types are consistent. The first value analysis unit 11 analyzes the first operation value based on the characteristics before and after maintenance shown in the extracted maintenance data. In this way, the analysis target plant can be analyzed based on the performance data of the existing plant.

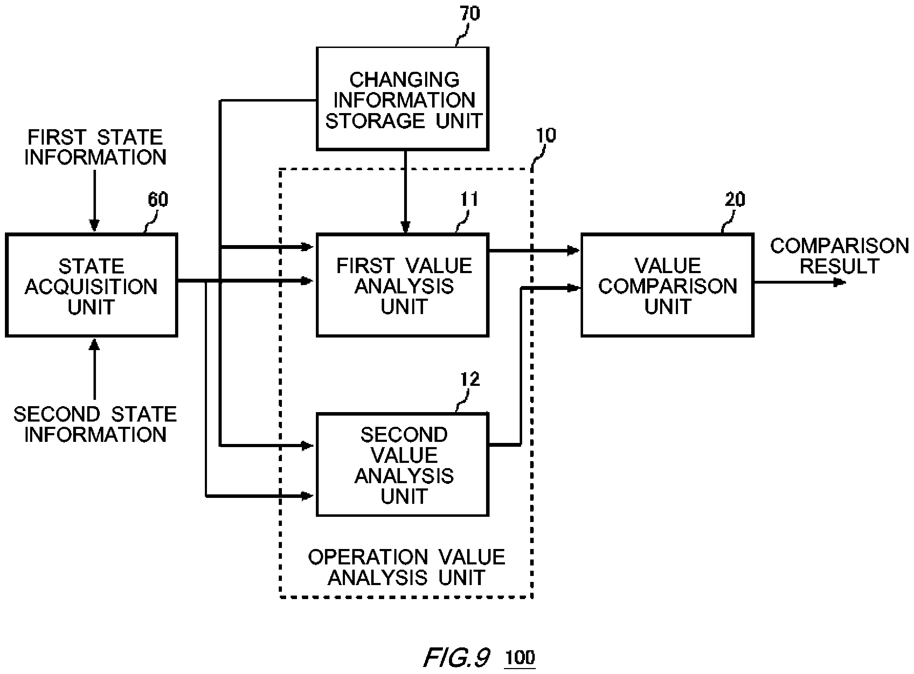

Fig. 9 illustrates another configuration example of the analysis apparatus 100. The analysis apparatus 100 of this example further includes a state acquisition unit 60 and a changing information storage unit 70 in addition to the configurations of the analysis apparatus 100 that have been described in Fig. 1 to Fig. 8. The other structures are the same as those of any analysis apparatus 100 described in Fig. 1 to Fig. 8.

The state acquisition unit 60 acquires first status information indicating the state of the analysis target plant when the maintenance process is performed and second status information indicating the state of the analysis target plant when the maintenance process is not performed on the analysis target plant. The state information may be information indicating characteristics such as a flow rate of each device of the plant, information indicating characteristics of a group of devices of the plant, or information indicating characteristics of the entire plant. The first status information may include the plant information and the maintenance information described in Fig. 1 to Fig. 8. The second status information may include the plant information.

The changing information storage unit 70 stores the changing information indicating the change over time of the state of the analysis target plant. The changing information storage unit 70 may store the changing information for each operating condition of the analysis target plant. The changing information storage unit 70 may compensate the changing information based on the operating condition of the analysis target plant. The changing information storage unit 70 may store the structure and the operating condition of an existing plant and the performance value of the change over time of the state of the plant in correspondence.

The operating condition may include an amount of materials fed per unit time, an amount of deliverables or emissions per unit time, a pressure of each device, a flow rate, temperature, temperature, humidity, an amount of rain-fall and so on at an installation site of the plant. The operating condition may include the control information input into each device. The control information may include control data input into each device for controlling the operations of the device. For example, the control data is data for controlling the aperture of a valve or the like.

The first value analysis unit 11 analyzes the state over time during a predetermined period of the analysis target plant when the maintenance process is performed based on the first status information and the changing information, and analyzes the first operation value based on the state over time. The first value analysis unit 11 regards each parameter shown in the first status information as the initial value, and analyzes the state over time of the analysis target plant by changing each parameter over time according to the changing information.

The second value analysis unit 12 analyzes the state over time during a predetermined period of the analysis target plant when the maintenance process is not performed based on the second status information and the changing information, and analyzes the second operation value based on the state overtime. The second value analysis unit 12 regards each parameter shown in the second status information as the initial value, and analyzes the state over time of the analysis target plant by changing each parameter over time according to the changing information. According to this example, the operation value can be calculated considering the deterioration over time of the plant after the maintenance process being performed.

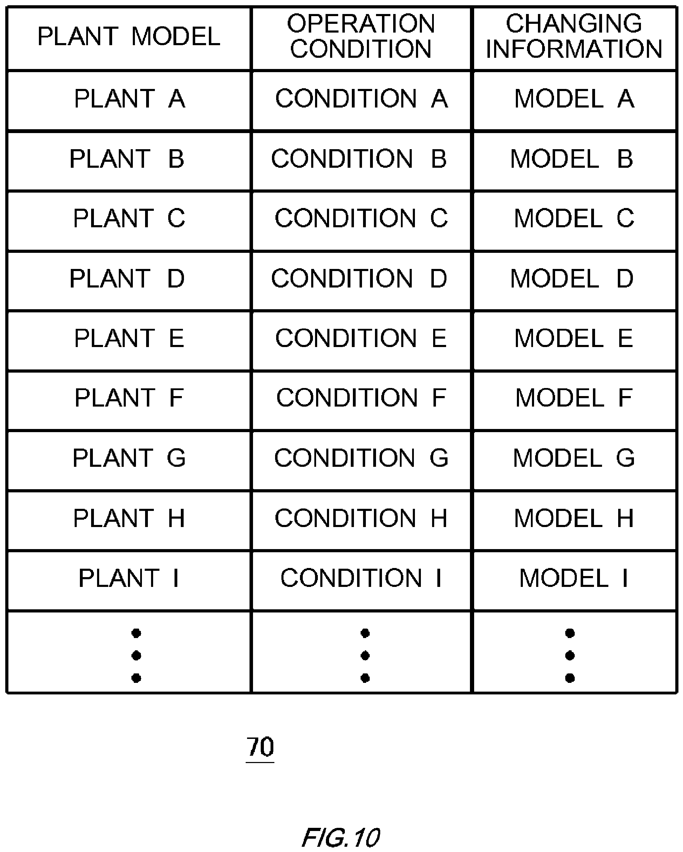

Fig. 10 illustrates one example of changing information stored in the changing information storage unit 70. The changing information storage unit 70 of this example stores the plant model, the operating condition and the changing information in correspondence. The changing information storage unit 70 may store the performance data of an existing plant. The operation value analysis unit 10 may calculate the similarity between the structure of the analysis target plant and the plant model, and extract the changing information where the similarity is equal to or greater than a predetermined value. The operation value analysis unit 10 may extract the changing information where the similarity of the operating condition becomes equal to or greater than the predetermined value for the analysis target plant.

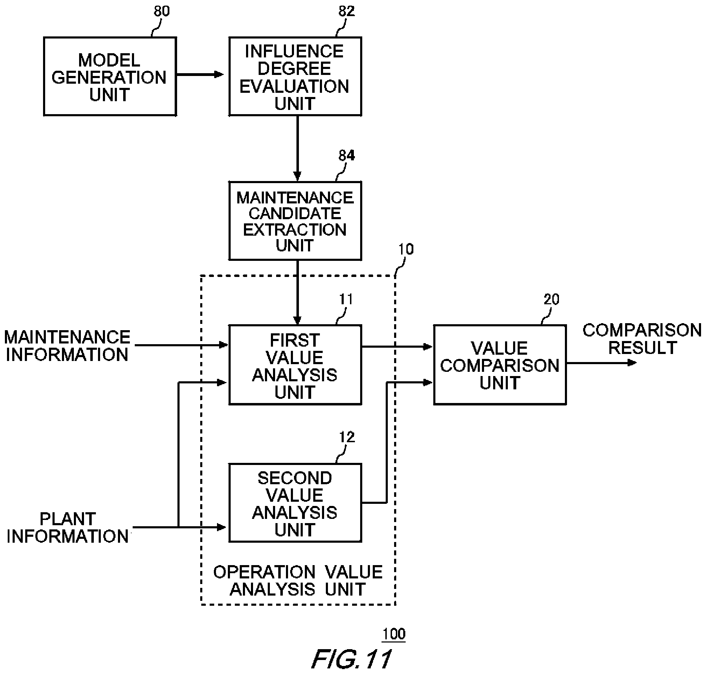

Fig. 11 illustrates another configuration example of the analysis apparatus 100. The analysis apparatus 100 of this example further includes a model generation unit 80, an influence degree evaluation unit 82 and a maintenance candidate extraction unit 84 in addition to the configurations of the analysis apparatus 100 that have been described in Fig. 1 to Fig. 10. The other structures are the same as those of any analysis apparatus 100 described in Fig. 1 to Fig. 10.

The model generation unit 80 produces a first model that simulates a case where production is performed in a first state of the plurality of devices that constitute the analysis target plant, and a second model that simulates a case where production is performed in a second state, which is different from the first state, of the plurality of devices. The state of the device may be the performance of the device. Each model may be a simulation model that simulates the operations of each device. The first model and the second model have different states for one or more devices. For example, even if the same control value is input for the device, the operation results are different between the first model and the second model.

The influence degree evaluation unit 82 compares the first model and the second model to evaluate the influence degree of each state of the device on the operation value. The influence degree evaluation unit 82 may simulate the operations of the plant and calculate the operation value for each of the first model and the second model. The influence degree on the operation value of the device where the state in the first model and the state in the second model are set to be different, can be evaluated with the difference of the operation value between the first model and the second model.

The model generation unit 80 may produce a plurality of second models, varying the devices that cause the states to differ between models. The influence degree evaluation unit 82 compares the first model to each of the second models. In this way, the influence degree on the operation value of each device can be evaluated.

Also, the model generation unit 80 may produce the plurality of second models with varying degrees of state differences between the models. The influence degree evaluation unit 82 compares the first model to each of the second models. In this way, the influence degree on the operation value of the degree of state change of each device can be evaluated.

The maintenance candidate extraction unit 84 extracts one or more devices that become maintenance candidates in the analysis target plant based on the evaluation results in the influence degree evaluation unit 82. The maintenance candidate extraction unit 84 may extract the one or more devices, as the maintenance candidates, in an order from the device with the greatest influence degree on the operation value.

The first value analysis unit 11 calculates the first operation value when a predetermined maintenance process is performed for the device extracted by the maintenance candidate extraction unit 84. The contents of the maintenance process may be designated by the maintenance information, or may be preset for each device. When a plurality of devices are extracted, the first value analysis unit 11 may calculate the first operation value for each device. According to this example, the candidates of the devices to be maintained can be extracted, and the effects after the maintenance of the devices can be presented to the user.

As one example, the first state indicates a state of a case where ideal production is performed. That is, the first state is a state where the characteristics of each device of the plant do not vary from the initial values such as specification values of the device. The second state is a state that, for example, simulates a real-world production condition. In the second state, the characteristics of each device vary from the initial values. The second state may be measured values of the state of the existing plant. In this case, the operation value for the second state may be measured values of the operation value of the plant. That is, the second model may be produced from the performance values of the existing plant.

The maintenance candidate extraction unit 84 can extract the devices or a group of devices having influences on the operation value based on the difference of the operation values between the first state and the second state. The value comparison unit 20 may output the candidates of the devices to be maintained and a change in the operation value when the devices are maintained. The value comparison unit 20 may output the candidates of the devices to be maintained, and the change in the operation value, the change in the operation cost and the cost of the maintenance.

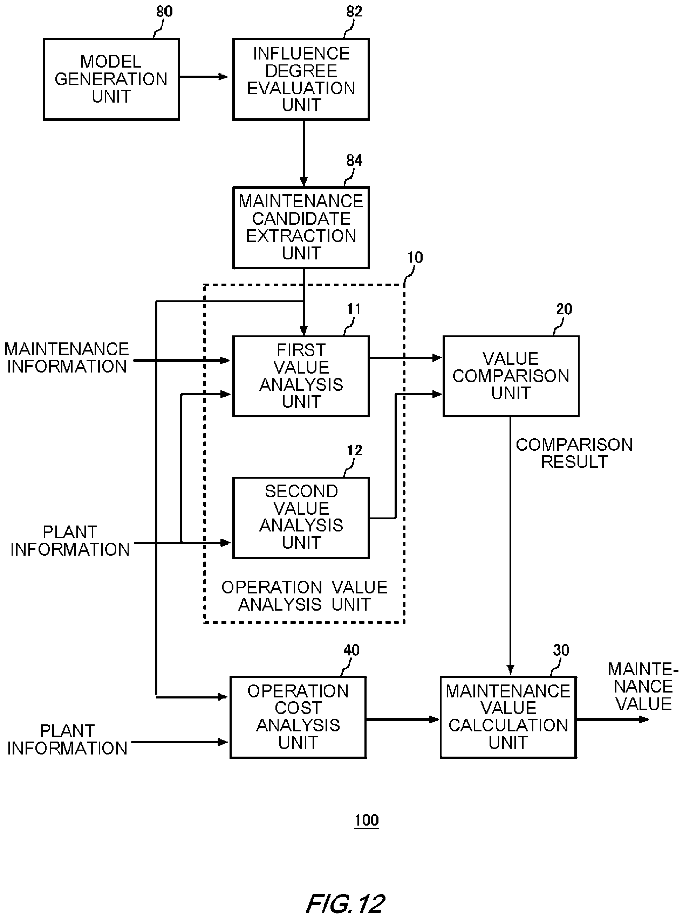

Fig. 12 illustrates another configuration example of the analysis apparatus 100. The analysis apparatus 100 of this example further includes a model generation unit 80, an influence degree evaluation unit 82 and a maintenance candidate extraction unit 84 in addition to the configurations of the analysis apparatus 100 that have been described in Fig. 7. The other structures are the same as those of any analysis apparatus 100 described in Fig. 7. Also, the functions of the model generation unit 80, the influence degree evaluation unit 82 and the maintenance candidate extraction unit 84 are similar to the examples in Fig. 11.

However, the influence degree evaluation unit 82 compares the first model to the second model, and evaluates the influence degree on the operation cost from the state of each device. The influence degree evaluation unit 82 may simulate the operations of the plant and calculate the operation cost for each of the first model and the second model. The influence degree on the operation cost of the device where the state in the first model and the state in the second model are set to be different, can be evaluated with the difference of the operation cost between the first model and the second model.

The maintenance candidate extraction unit 84 extracts the devices that become candidates on which the maintenance process is performed based on the influence degree calculated by the influence degree evaluation unit 82. The operation cost analysis unit 40 analyzes the operation cost when the maintenance process is performed on the devices extracted as candidates. Also, the first value analysis unit 11 analyzes the operation value when the maintenance process is performed on the devices extracted as candidates. According to this example, the candidates of the devices of the maintenance target can be extracted based on the influence on the operation cost.

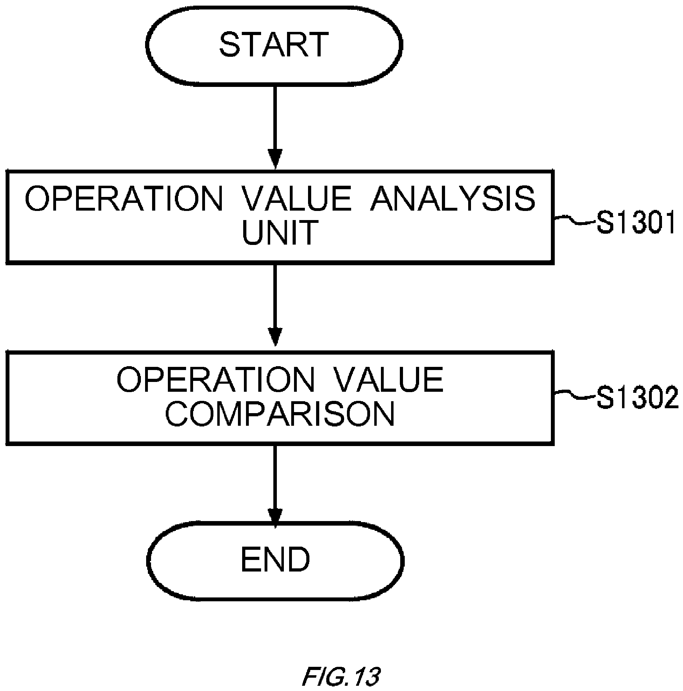

Fig. 13 illustrates one example of an analysis method of the analysis target plant. Each process of the analysis method may be similar to the operations of the analysis apparatus 100 described in Fig. 1 to Fig. 12.

First, the operation value analysis unit 10 analyzes the operation value that depends on at least one of the amount or quality of the deliverables or emissions produced or emitted by the analysis target plant under the specified conditions, both when maintenance is performed and when maintenance is not performed on the analysis target plant (S1301).

Next, the value comparison unit 20 compares the first operation value when the maintenance process is performed to the second operation value when the maintenance process is not performed (S1302). In the analysis method, in addition to the process shown in Fig. 13, the process described in Fig. 1 to Fig. 12 may be performed.

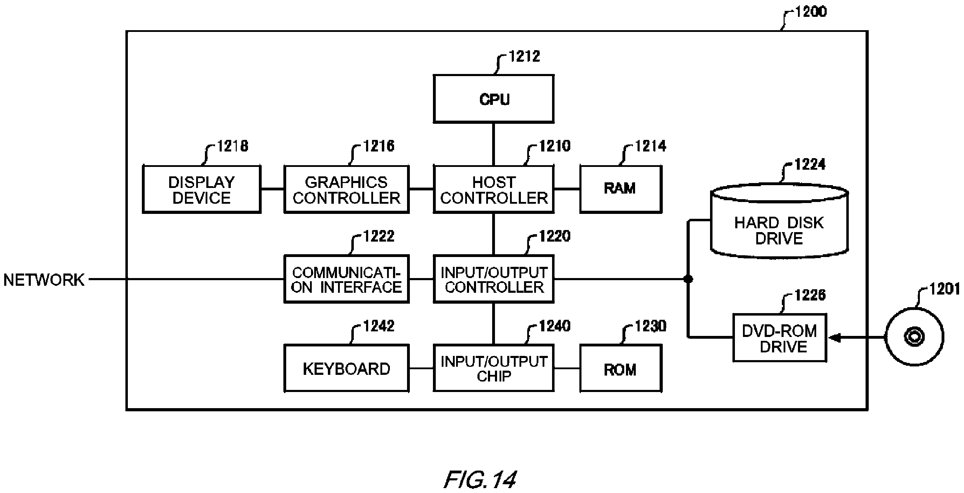

Fig. 14 illustrates an example configuration of a computer 1200 in which all or some aspects of the present invention can be embodied. A program installed on the computer 1200 can cause the computer 1200 to function as an operation associated with a device according to embodiments of the present invention or as one or more "unit(s)" of the device, or to perform the operation or the one or more "unit(s)", and/or can cause the computer 1200 to perform processes according to embodiments of the present invention or steps of the processes. Such a program may be executed by a CPU 1212 to cause the computer 1200 to perform particular operations associated with some or all blocks in the flowcharts or block diagrams described herein. Processes according to embodiments of the present invention or steps of the processes may also be performed on a cloud network or the like.

The computer 1200 according to the present embodiment includes a CPU 1212, a RAM 1214, a graphics controller 1216 and a display device 1218, which are connected to each other by a host controller 1210. The computer 1200 also includes input/output units such as a communication interface 1222, a hard disk drive 1224, a DVD-ROM drive 1226 and an IC card drive, which are connected to the host controller 1210 via an input/output controller 1220. The computer also includes legacy input/output units such as a ROM 1230 and a keyboard 1242, which are connected to the input/output controller 1220 via an input/output chip 1240.

The CPU 1212 operates in accordance with programs stored in the ROM 1230 and the RAM 1214, and controls each unit accordingly. The graphics controller 1216 acquires image data generated by the CPU 1212 on a frame buffer or the like provided in the RAM 1214 or in the graphics controller 1216 itself, and displays the image data on the display device 1218.

The communication interface 1222 communicates with other electronic devices via a network. The hard disk drive 1224 stores programs and data to be used by the CPU 1212 in the computer 1200. The DVD-ROM drive 1226 reads programs or data from the DVD-ROM 1201, and provides the programs or data to the hard disk drive 1224 via the RAM 1214. The IC card drive reads programs and data from an IC card, and/or writes programs and data into the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port or the like.

Programs are provided by a computer-readable storage medium such as the DVD-ROM 1201 or an IC card. The programs are read from the computer-readable storage medium, installed on the hard disk drive 1224, the RAM 1214 or the ROM 1230, which are also examples of a computer-readable storage medium, and executed by the CPU 1212. Information processing written in these programs is read by the computer 1200, resulting in cooperation between a program and the above-described various types of hardware resources. An apparatus or method may be constituted by realizing the operation or processing of information in accordance with the usage of the computer 1200.

For example, if communication is made between the computer 1200 and external devices, the CPU 1212 may execute a communication program loaded on the RAM 1214, and instruct the communication interface 1222 to perform communication processing based on the processing described in the communication program. Under the control of the CPU 1212, the communication interface 1222 reads transmission data stored in a transmission buffer region provided in a recording medium such as the RAM 1214, the hard disk drive 1224, the DVD-ROM 1201 or an IC card, and sends the read transmission data to the network, or writes reception data received from the network into a reception buffer region or the like provided in the recording medium.

The CPU 1212 may also make all or required portions of the files or databases stored in an external recording medium such as the hard disk drive 1224, the DVD-ROM drive 1226 (DVD-ROM 1201) or an IC card to be read by the RAM 1214, and perform various types of processing on the data on the RAM 1214. Then, the CPU 1212 may write back the processed data to the external recording medium.

Various types of information such as various types of programs, data, tables and databases may be stored in the recording medium for information processing. The CPU 1212 may execute various types of processing on the data read from the RAM 1214 to write back a result to the RAM 1214, the processing being described throughout the present disclosure, specified by instruction sequences of the programs, and including various types of operations, information processing, condition determinations, conditional branching, unconditional branching, information retrievals/replacements, or the like. In addition, the CPU 1212 may search for information in the file, the database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, read the attribute value of the second attribute stored in the entry, and thereby acquire the attribute value of the second attribute associated with the first attribute that meets a predetermined condition.

The programs or software modules in the above description may be stored on the computer 1200 or a computer-readable storage medium near the computer 1200. Further, a recording medium such as a hard disk or a RAM provided in a server system connected to a dedicated communication network or the Internet can be used as a computer-readable storage media, which provides programs to the computer 1200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: operation value analysis unit; 11: first value analysis unit; 12: second value analysis unit; 20: value comparison unit; 30: maintenance value calculation unit; 40: operation cost analysis unit; 50: maintenance data storage unit; 60: state acquisition unit; 70: changing information storage unit; 80: model generation unit; 82: influence degree evaluation unit; 84: maintenance candidate extraction unit; 100: analysis apparatus; 1200: computer; 1201: DVD-ROM; 1210: host controller; 1212: CPU; 1214: RAM; 1216: graphics controller; 1218: display device; 1220: input/output controller; 1222: communication interface; 1224: hard disk drive; 1226: DVD-ROM drive; 1230: ROM; 1240: input/output chip; 1242: keyboard

## Claims

1. An analysis apparatus, comprising:
an operation value analysis unit configured to analyze operation values including a first operation value when a maintenance process is performed on an analysis target plant and a second operation value when the maintenance process is not performed on the analysis target plant, each of the operation values depending on at least any of an amount or quality of deliverables produced or emissions emitted by the analysis target plant under a designated condition; and
a value comparison unit configured to compare the first operation value to the second operation value.

2. The analysis apparatus according to claim 1, wherein the operation value analysis unit is configured to analyze the operation value depending on the quality of the deliverables.

3. The analysis apparatus according to claim 1, wherein the operation value analysis unit is configured to analyze the operation value depending on the amount of the emissions.

4. The analysis apparatus according to any one of claims 1 to 3, wherein the operation value analysis unit is configured to calculate the operation value per unit operation time of the analysis target plant.

5. The analysis apparatus according to any one of claims 1 to 4, further comprising a maintenance value calculation unit configured to calculate a value of the maintenance process, based on a difference between the first operation value and the second operation value, and a fee of the maintenance process.

6. The analysis apparatus according to claim 5, further comprising
an operation cost analysis unit configured to analyze operation costs including a first operation cost when a maintenance process is performed on an analysis target plant and a second operation cost when the maintenance process is not performed on the analysis target plant, each of the operation costs being a cost to operate the analysis target plant under a designated condition,
wherein the maintenance value calculation unit is configured to calculate a value of the maintenance process, further based on a difference between the first operation cost and the second operation cost.

7. The analysis apparatus according to claim 5 or 6, wherein the maintenance value calculation unit is configured to calculate time of the maintenance process that maximizes a value of the maintenance process.

8. The analysis apparatus according to any one of claims 1 to 7, further comprising
a maintenance data storage unit configured to store maintenance data indicating a state change in each existing plant when various maintenance processes are performed in a plurality of existing plants,
wherein the operation value analysis unit is configured to extract, from the maintenance data storage unit, the maintenance data of the existing plant corresponding to the analysis target plant, and analyze the operation value based on the maintenance data extracted.

9. The analysis apparatus according to claim 8, wherein
the operation value analysis unit is configured to extract, based on at least one of a scale of a plant, types of the deliverables, types of the emissions or used device, the existing plant similar to the analysis target plant.

10. The analysis apparatus according to any one of claims 1 to 9, further comprising:
a state acquisition unit configured to acquire first status information indicating a state of the analysis target plant when the maintenance process is performed and second status information indicating a state of the analysis target plant when the maintenance process is not performed on the analysis target plant; and
a changing information storage unit configured to store changing information indicating a change over time in a state of the analysis target plant,
wherein the operation value analysis unit is configured to:
analyze a state over time of the analysis target plant on which the maintenance process is performed, based on the first status information and the changing information, and analyze the first operation value, based on the state over time; and
analyze a state over time of the analysis target plant on which the maintenance process is not performed based on the second status information and the changing information, and analyzes the second operation value based on the state over time.

11. The analysis apparatus according to any one of claims 1 to 10, further comprising:
a model generation unit configured to produce a first model for simulating a case where a production is performed with a state of a plurality of devices constituting the analysis target plant being a first state, and a second model for simulating a case where a production is performed with a state of the plurality of devices being a second state, which is different from the first state;
an influence degree evaluation unit configured to compare the first model to the second model, and evaluate an influence degree on the operation values from a state of each of the devices; and
a maintenance candidate extraction unit configured to extract, from the plurality of devices, a candidate on which a maintenance process is performed, based on the influence degree,
wherein the operation value analysis unit is configured to analyze the first operation value when the maintenance process is performed on the device extracted as the candidate.

12. The analysis apparatus according to claim 6, further comprising:
a model generation unit configured to produce a first model for simulating a case where a production is performed with a state of a plurality of devices constituting the analysis target plant being a first state, and a second model for simulating a case where a production is performed with a state of the plurality of devices being a second state, which is different from the first state;
an influence degree evaluation unit configured to compare the first model to the second model, and evaluate an influence degree on the operation costs from a state of each of the devices; and
a maintenance candidate extraction unit configured to extract, from the plurality of devices, a candidate on which a maintenance process is performed, based on the influence degree,
wherein the operation cost analysis unit is configured to analyze the operation costs when the maintenance process is performed on the device extracted as the candidate.

13. An analysis method, comprising:
analyzing operation values including a first operation value when a maintenance process is performed on an analysis target plant and a second operation value when the maintenance process is not performed on the analysis target plant, each of the operation values depending on at least any of an amount or quality of deliverables produced or emissions emitted by the analysis target plant under a designated condition; and
comparing the first operation value to the second operation value.

14. A program for causing a computer to execute the analysis method according to claim 13.
